# EUROPÄISCHE PATENTANMELDUNG

(11) **EP 3 059 512 A1**
(43) Veröffentlichungstag der Anmeldung: **24.08.2016**
(21) Anmeldenummer: 16153155.3
(22) Anmeldetag: 28.01.2016
(51) Int. Cl.: F24F 5/00, F24F 11/02, F24F 12/00, F24F 11/00

(54) **LÜFTUNGSANLAGE**

(30) Priorität: 23.02.2015 AT 962015
(71) Anmelder: Drexel und Weiss Energieeffiziente Haustechniksysteme GmbH, 6960 Wolfurt (AT)
(72) Erfinder: Drexel, Christof, 6922 Wolfurt (AT)
(74) Vertreter: Hofmann, Ralf U.

(57) **Zusammenfassung**

Bei einem Verfahren zum Betreiben einer Lüftungsanlage, welche einen Wärmetauscher (1) mit einem Zuluftkanal (2), durch den aus dem Freien durch eine Frischluftleitung (4) zugeführte Luft führbar ist, und einem Abluftkanal (3) aufweist, durch den aus dem Gebäudeinneren abgeführte Luft geführt wird, wobei durch die Frischluftleitung (4) strömende Luft mittels einer Absperrvorrichtung (11, 12) wahlweise einem eingangsseitigen Ende des Zuluftkanals (2) des Wärmetauschers (1) oder einer den Wärmetauscher (1) umgehenden Bypassleitung (10) zuführbar ist, wird unterhalb eines Temperaturgrenzwertes zum Verhindern des Verschlusses des Abluftkanals (3) des Wärmetauschers (1) in Folge Vereisung in wiederholten Abtauphasen jeweils ein Abtauprozess durchgeführt, in welchem die aus dem Freien zugeführte Luft zumindest teilweise, vorzugsweise vollständig, unter Umgehung des Wärmetauschers (1) über die Bypassleitung (10) einer mit einem ausgangsseitigen Ende des Zuluftkanals (2) des Wärmetauschers (1) verbundenen Zuluftleitung (5) zugeführt wird und die durch die Zuluftleitung (5) strömende Luft in einem Hilfs-Wärmetauscher (17) erwärmt wird, und im Anschluss an einen jeweiligen Abtauprozess die aus dem Freien zugeführte Luft wieder durch den Zuluftkanal (2) des Wärmetauschers (1) der Zuluftleitung (5) zugeführt. Die Erwärmung der durch die Zuluftleitung (5) strömenden Luft während eines jeweiligen Abtauprozesses wird im Hilfs-Wärmetauscher (17) mittels eines Phasenwechselmaterials (19) durchgeführt. Phasenwechselmaterial (19), welches während einer jeweiligen Abtauphase bei der Erwärmung der durch die Zuluftleitung (5) strömenden Luft erstarrt ist, wird im Anschluss an die Abtauphase durch einen Wärmeübertrag aus der durch den Zuluftkanal (2) des Wärmetauschers in die Zuluftleitung (5) geführten Luft wieder geschmolzen.

## Beschreibung

Die Erfindung bezieht sich auf ein Verfahren zum Betreiben einer Lüftungsanlage, welche einen Wärmetauscher mit einem Zuluftkanal, durch den aus dem Freien durch eine Frischluftleitung zugeführte Luft führbar ist, und einem Abluftkanal aufweist, durch den aus dem Gebäudeinneren abgeführte Luft geführt wird, wobei durch die Frischluftleitung strömende Luft mittels einer Absperrvorrichtung wahlweise einem eingangsseitigen Ende des Zuluftkanals des Wärmetauschers oder einer den Wärmetauscher umgehenden Bypassleitung zuführbar ist, wobei unterhalb eines Temperaturgrenzwertes zum Verhindern des Verschlusses des Abluftkanals des Wärmetauschers in Folge Vereisung in wiederholten Abtauphasen jeweils ein Abtauprozess durchgeführt wird, in welchem die aus dem Freien zugeführte Luft zumindest teilweise, vorzugsweise vollständig, unter Umgehung des Wärmetauschers über die Bypassleitung einer mit einem ausgangsseitigen Ende des Zuluftkanals des Wärmetauschers verbundenen Zuluftleitung zugeführt wird und die durch die Zuluftleitung strömende Luft in einem Hilfs-Wärmetauscher erwärmt wird, und im Anschluss an einen jeweiligen Abtauprozess die aus dem Freien zugeführte Luft wieder durch den Zuluftkanal des Wärmetauschers der Zuluftleitung zugeführt wird, wobei die Erwärmung der durch die Zuluftleitung strömenden Luft während eines jeweiligen Abtauprozesses im Hilfs-Wärmetauscher mittels eines Phasenwechselmaterials durchgeführt wird. Im Weiteren bezieht sich die Erfindung auf eine Lüftungsanlage umfassend eine Frischluftleitung für aus dem Freien zugeführte Luft, einen Wärmetauscher, welcher einen Zuluftkanal, der einerseits mit der Frischluftleitung und andererseits mit einer Zuluftleitung zur Weiterführung der aus dem Zuluftkanal austretenden Luft ins Gebäudeinnere verbunden ist, und einen Abluftkanal aufweist, der einerseits mit einer Abluftleitung für aus dem Gebäudeinneren abgeführte Luft und andererseits mit einer ins Freie führenden Fortluftleitung verbunden ist, Zuluft- und Abluftventilatoren zum Zuführen der Luft aus dem Freien und Abführen der Luft aus dem Gebäudeinneren, eine zwischen der Frischluftleitung und Zuluftleitung verlaufende Bypassleitung, wobei die aus dem Freien zugeführte Luft mittels einer Absperrvorrichtung wahlweise durch den Zuluftkanal des Wärmetauschers oder unter Umgehung des Wärmetauschers durch die Bypassleitung führbar ist, eine Steuerung zum Ansteuern der Absperrvorrichtung und einen Hilfs-Wärmetauscher, durch welchen stromabwärts der Einmündung der Bypassleitung in die Zuluftleitung die durch die Zuluftleitung strömende Luft geführt ist und in welchem zum Erwärmen von durch die Zuluftleitung strömender Luft während wiederholter Abtauphasen ein Phasenwechselmaterial angeordnet ist.

Bekannt sind Lüftungsanlagen zur Gebäudelüftung, auch als kontrollierte Be- und Entlüftung oder Komfortlüftung bezeichnet, bei denen aus dem Freien zugeführte Frischluft durch einen Erdwärmetauscher geführt wird und dadurch bei tiefen Außentemperaturen vorerwärmt wird. Die so vorerwärmte Frischluft, welche im Anschluss dem Wärmetauscher der Lüftungsanlage zugeführt wird, der zur Wärmerückgewinnung der aus dem Gebäudeinneren abgeführten Abluft dient, weist dadurch eine auch bei tiefen, unter dem Gefrierpunkt liegenden Außentemperaturen eine über dem Gefrierpunkt liegende Temperatur auf.

Ist kein solcher Erdwärmetauscher vorhanden, sind andere Maßnahmen erforderlich, um einen Verschluss des Abluftkanals des Wärmetauschers durch Gefrieren von in der Folge der Abkühlung der Abluft entstehenden Kondensats zu verhindern. Eine übliche Maßnahme zu diesem Zweck ist es, ein elektrisches Heizregister vorzusehen, mit dem die dem Wärmetauscher zugeführte Frischluft bei tiefen Außentemperaturen vor Eintritt in den Wärmetauscher vorerwärmt wird. Statt mit einem elektrischen Heizregister kann die Vorerwärmung beispielsweise auch mit einem an einen hydraulischen Heizkreis des Gebäudes angeschlossenen Heizregister durchgeführt werden. Eine solche kontinuierliche Vorerwärmung der Frischluft bei tiefen Außentemperaturen führt aber zu einem erheblichen Energie-Mehraufwand.

Aus der EP 2 444 755 A2 und der JP 62-019632 A ist es bekannt, bei tiefen Außentemperaturen zeitweise eine Bildung von Eis im Bereich des Ausgangs des Abluftkanals des Wärmetauschers zuzulassen und dieses dann jeweils wieder in einem Abtauprozess durch ausreichend lange und ausreichend hohe Vorerwärmung der dem Wärmetauscher zugeführten Frischluft zu schmelzen. Beispielsweise wird die Temperatur der Frischluft hierbei auf einen so hohen Wert erhöht, dass die durch den Wärmetauscher geführte Abluft aus dem Gebäudeinneren bei ihrem Austritt aus dem Wärmetauscher (=Fortlufttemperatur) im Bereich von 20° C bis 40° C liegt. Es kann dadurch schon nach wenigen Minuten die erforderliche Energiemenge eingebracht werden, um das gesamte gebildete Eis wieder zu schmelzen. Durch diese Vorgehensweise wird gegenüber einer kontinuierlichen Vorerwärmung der zugeführten Frischluft eine deutliche Energieeinsparung erreicht.

Eine weitere bekannte Methode zur Eisfreihaltung zieht zu diesem Zweck eine Bypassleitung zur Umgehung des Wärmetauschers heran. Solche Bypassleitungen sind üblicherweise ohnehin vorhanden, um im Sommerbetrieb die zugeführte Frischluft am Wärmetauscher vorbeizuführen, sodass es zu keiner unerwünschten Erwärmung der zugeführten Frischluft kommt. Bei tiefen Außentemperaturen wird eine Absperrvorrichtung, mittels der die zugeführte Frischluft vom Zuluftkanal des Wärmetauschers abgesperrt wird und der Bypassleitung zugeführt wird, beispielsweise eine Umschaltklappe, soweit betätigt, dass ein erster Teil der zugeführten Frischluft dem Zuluftkanal des Wärmetauschers zugeführt wird und ein zweiter Teil durch die Bypassleitung geführt wird, sodass die Temperatur am Ausgang des Abluftkanals des Wärmetauschers über dem Gefrierpunkt bleibt. Nach dem Wärmetauscher werden die beiden Teilströme der Luft in einer vom Wärmetauscher wegführenden Zuluftleitung wieder zusammengeführt. Aus den Verhältnissen der beiden Volumenströme und ihren Temperaturen beim Zusammenführen ergibt sich die Temperatur der durch die Zuluftleitung nach dem Zusammenführen strömenden Luft. Um Zugerscheinungen im Gebäudeinneren und Probleme durch Kondensation zu vermeiden, muss diese Temperatur hierbei über einer vorgegebenen Zuluft-Mindesttemperatur bleiben. Als diese Zuluft-Mindesttemperatur wird üblicherweise ein Wert von 16,5° C angesetzt. Bei entsprechend niedrigen Außentemperaturen ist daher eine Nacherwärmung der durch die Zuluftleitung strömenden Luft erforderlich.

Zu diesem Zweck wird herkörnmlicherweise ein Hilfs-Wärmetauscher mit einer elektrischen oder hydraulischen Heizvorrichtung eingesetzt. Zur Verringerung des Apparateaufwands wurde auch die Verwendung eines Wärmerohres (speziell in Form einer Heatpipe) vorgeschlagen.

Im Weiteren ist es auch beim Einsatz der Bypassleitung zur Eisfreihaltung des Wärmetauschers bereits bekannt, die Bildung von Eis zeitweise zuzulassen und das gebildete Eis während sich wiederholenden Abtauphasen wieder zu schmelzen. Während der Abtauphasen wird dann die Frischluft günstigerweise vollständig am Wärmetauscher vorbeigeführt, sodass sich der Ausgang des Abluftkanals des Wärmetauschers durch die durch den Abluftkanal des Wärmetauschers strömende Abluft auf Temperaturen weit über dem Gefrierpunkt erwärmt. Die am Wärmetauscher vorbeigeführte Frischluft muss dann während einer jeweiligen Abtauphase im Hilfs-Wärmetauscher, welcher üblicherweise in der vom Wärmetauscher wegführenden Zuluftleitung, stromabwärts der Einmündung der Bypassleitung in die Zuluftleitung, angeordnet ist, mittels der Heizvorrichtung entsprechend stark aufgeheizt werden, um über der vorgegebenen Mindesttemperatur zu liegen.

Aus der prioritätsälteren, nicht vorveröffentlichten EP 2 876 378 A1 geht gemäß einem der beschriebenen Ausführungsbeispiele ein Verfahren der eingangs genannten Art hervor. Der Hilfs-Wärmetauscher ist als Latentwärmespeicher ausgebildet. Um das darin angeordnete Material zu erwärmen dient Abluft, welche durch zusätzlich vorgesehene Leitungen dem Hilfs-Wärmetauscher zugeführt wird. Als Alternative ist eine Elektroheizung erwähnt.

Aufgabe der Erfindung ist es, ein Verfahren der eingangs genannten Art zum Betreiben einer Lüftungsanlage bereitzustellen, durch welches eine Energieeinsparung bei tiefen, unter dem Gefrierpunkt liegenden Außentemperaturen erreicht wird bzw. eine Lüftungsanlage der eingangs genannten Art bereitzustellen, durch welche bei tiefen, unter dem Gefrierpunkt liegenden Außentemperaturen eine Energieeinsparung ermöglicht wird. Erfindungsgemäß gelingt dies durch ein Verfahren mit den Merkmalen des Anspruchs 1 bzw. durch eine Lüftungsanlage mit den Merkmalen des Anspruchs 6.

Beim Verfahren zum Betreiben einer Lüftungsanlage gemäß der Erfindung bzw. bei der Lüftungsanlage gemäß der Erfindung wird ein Phasenwechselmaterial eingesetzt, um durch die Zuluftleitung strömende Luft während einer Abtauphase im Hilfs-Wärmetauscher zu erwärmen, damit die Temperatur dieser Luft auf einen Wert über einer vorgegebenen Zuluft-Mindesttemperatur gebracht wird. Während einer jeweiligen Abtauphase wird durch die Frischluftleitung aus dem Freien zugeführte Luft zumindest teilweise, vorzugsweise zu mehr als 50%, besonders bevorzugt vollständig, durch die Bypassleitung geführt, also am Wärmetauscher vorbeigeführt.

Solche Abtauprozesse werden zur Verhinderung eines Eisverschlusses des Abluftkanals des Wärmetauschers bei einer entsprechend niedrigen, unter dem Gefrierpunkt liegenden Außentemperatur wiederholt durchgeführt. Die Durchführung solcher wiederholter Abtauprozesse kann hierbei in Abhängigkeit davon erfolgen, ob eine von der Steuerung erfasste Temperatur, welche der Außentemperatur entspricht oder mit dieser korreliert, unterhalb eines unteren Temperaturgrenzwerts liegt. Liegt diese von der Steuerung erfasste Temperatur unterhalb des unteren Temperaturgrenzwerts, so werden solche wiederholte Abtauprozesse durchgeführt.

Nach Beendigung eines jeweiligen Abtauprozesses wird die durch die Frischluftleitung aus dem Freien zuströmende Luft wieder dem Zuluftkanal des Wärmetauschers zugeführt, wobei die Bypassleitung mittels der Absperrvorrichtung abgesperrt wird. Die durch den Zuluftkanal strömende Luft wird hierbei durch Wärmetausch mit der durch den Abluftkanal des Wärmetauschers strömenden Luft so weit erwärmt, dass diese in der vom Wärmetauscher wegführenden Zuluftleitung eine über der Schmelztemperatur des Phasenwechselmaterials liegende Temperatur aufweist (eine ausreichend hohe Temperatur der Luft im Gebäudeinneren, vorzugsweise mindestens 20° C, vorausgesetzt). Während der Abtauphase erstarrtes Phasenwechselmaterial wird dadurch wieder geschmolzen, ohne dass hierfür eine weitere Maßnahme erforderlich ist. Die Regeneration des Phasenwechselmaterials erfolgt also im Normalbetrieb zwischen den Abtauphasen selbsttätig. Während des Schmelzens von Phasenwechselmaterial kommt es zwar zu einer gewissen Verringerung der Temperatur der durch den Zuluftkanal strömenden Luft, die Temperatur dieser Luft bleibt aber günstigerweise über der gewünschten Zuluft-Mindesttemperatur, wenn die Schmelztemperatur des Phasenwechselmaterlals über der Zuluft-Mindesttemperatur liegt.

Es kann somit eine Eisfreihaltung des Wärmetauschers bereitgestellt werden, welche ohne einen zusätzlichen Energieaufwand für eine Erwärmung der zugeführten Frischluft auskommt. Damit kann eine erhebliche Energieeinsparung gegenüber herkömmlichen Lüftungsanlagen bzw. herkömmlichen Verfahren zur Eisfreihaltung des Wärmetauschers erreicht werden.

Vorteilhafterweise liegt die Dauer einer jeweiligen Abtauphase im Bereich von 1 min bis 10 min, vorzugsweise im Bereich von 2 min bis 5 min.

Die Schmelztemperatur des Phasenwechselmaterials liegt günstigerweise im Bereich von 16° C bis 19° C, besonders bevorzugt im Bereich von 17° C bis 18° C.

Weitere Vorteile und Einzelheiten der Erfindung werden im Folgenden anhand der beiliegenden Zeichnung erläutert. In dieser zeigen:
Fig. 1 eine Prinzipdarstellung einer Lüftungsanlage gemäß der Erfindung;
Fig. 2 eine vereinfachte Seitenansicht des Hilfs-Wärmetauschers;
Fig. 3 ein Schnitt entlang der Linie AA von Fig. 2;
Fig. 4 einen vergrößerten Querschnitt durch ein Röhrchen des Hilfswärmetauschers.

Eine Lüftungsanlage gemäß der Erfindung, welche zur Gebäudelüftung, insbesondere Wohnraumlüftung, dient, weist einen Wärmetauscher 1 mit einem Zuluftkanal 2 und einem Abluftkanal 3 auf. Stromaufwärts (also bezogen auf die Strömungsrichtung am Anfang) ist am Zuluftkanal 2 eine Frischluftleitung 4 angeschlossen, durch welche mittels eines Zuluftventilators 8 Luft aus dem Freien angesaugt wird. Die durch die Frischluftleitung 4 angesaugte Luft wird auch als "Frischluft" bezeichnet und diese wird also (im geschlossenen Zustand des weiter unten beschriebenen Bypasses) einem eingangsseitigen Ende des Zuluftkanals 2 zugeführt. Stromabwärts (also bezogen auf die Strömungsrichtung am Ende) ist am Zuluftkanal 2 des Wärmetauschers 1 eine Zuluftleitung 5 angeschlossen. Die aus einem ausgangsseitigen Ende des Zuluftkanals 2 austretende Luft, welche mittels des Zuluftventilators 8 gefördert wird, strömt also in die Zuluftleitung 5. Die durch die Zuluftleitung 5 strömende Luft wird auch als "Zuluft" bezeichnet. Die durch die Zuluftleitung 5 geförderte Luft wird dem Gebäudeinneren zugeführt.

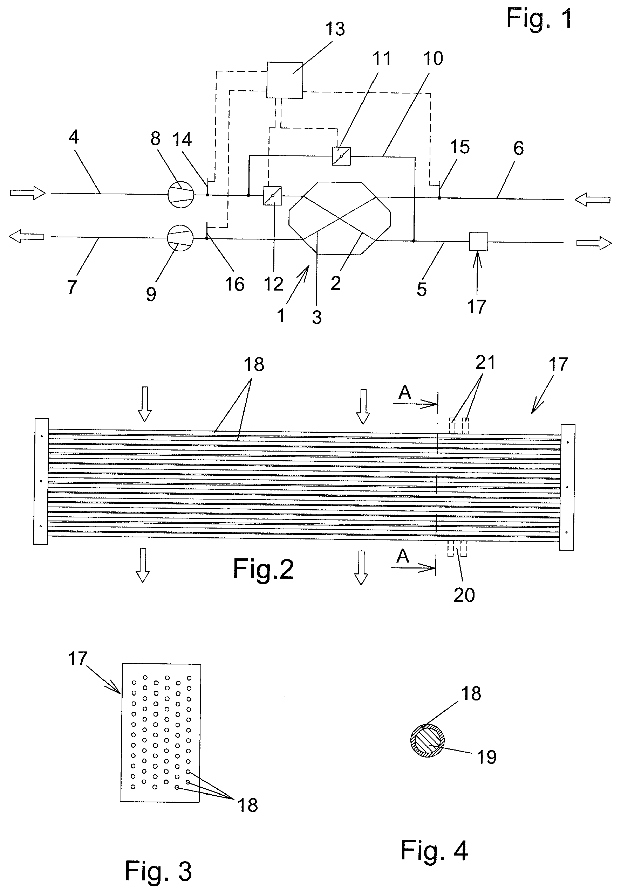

Der Zuluftventilator 8 ist gemäß Fig. 1 in der Frischluftleitung 4 angeordnet, könnte aber auch in der Zuluftleitung 5 angeordnet.

An den Abluftkanal 3 des Wärmetauschers 1 ist stromaufwärts eine Abluftleitung 6 angeschlossen, durch welche mittels eines Abluftventilators 9 Luft aus dem Gebäudeinneren angesaugt wird. Die durch die Abluftleitung 6 strömende Luft wird auch als "Abluft" bezeichnet. Stromabwärts ist an den Abluftkanal 3 des Wärmetauschers 1 eine Fortluftleitung 7 angeschlossen, in welche die mittels des Abluftventilators 9 durch den Abluftkanal 3 des Wärmetauschers 1 geförderte Luft strömt. Die durch die Fortluftleitung 7 strömende Luft wird auch als "Fortluft" bezeichnet und gelangt durch die Fortluftleitung 7 ins Freie.

Der Abluftventilator 9 ist gemäß Fig. 1 in der Fortluftleitung 7 angeordnet, könnte aber auch in der Abluftleitung 6 angeordnet sein.

Die durch die Frischluftleitung 4 vom Zuluftventilator 8 geförderte Luft kann über eine Bypassleitung 10 am Wärmetauscher 1 vorbeigeführt werden. Die Bypassleitung 10 geht somit von der Frischluftleitung 4 aus und mündet in die Zuluftleitung 5. Um den Luftstrom wahlweise durch den Zuluftkanal 2 des Wärmetauschers 1 oder unter Umgehung des Wärmetauschers 1 durch die Bypassleitung 10 zu führen, dient eine Absperrvorrichtung. Diese wird im gezeigten Ausführungsbeispiel von einem ersten Absperrorgan 11, das in der Frischluftleitung 4 stromabwärts der Abzweigung der Bypassleitung 10 angeordnet ist, insbesondere einer Absperrklappe, und einem zweiten Absperrorgan 12 gebildet, das in der Bypassleitung 10 angeordnet ist, insbesondere einer Absperrklappe. Es könnte aber auch ein einzelnes Absperrorgan in Form einer Umschaltklappe an der Abzweigung der Bypassleitung 10 von der Frischluftleitung 4 vorgesehen sein.

Die Absperrvorrichtung, also im Ausführungsbeispiel die beiden Absperrorgane 11, 12, werden von einer elektrischen Steuerung 13 angesteuert und können dadurch von der Steuerung 13 betätigt werden. Durch Ansteuerung der Absperrvorrichtung kann die Steuerung 13 somit den Frischluftstrom dem Zuluftkanal 2 des Wärmetauschers 1 zuführen oder der Bypassleitung 10 unter Umgehung des Wärmetauschers 1 zuführen. Auch eine Aufteilung des Frischluftstroms in zwei Teilströme (durch den Zuluftkanal 2 sowie durch die Bypassleitung 10) ist denkbar und möglich.

Der Steuerung 13 werden im Weiteren Ausgangssignale von Temperatursensoren 14, 15 und 16 zugeführt.

Der Temperatursensor 14 erfasst die Temperatur der durch die Frischluftleitung 4 zugeführten Luft (="Frischlufttemperatur"). Wenn diese Temperatur unterhalb eines vorgegebenen Temperaturgrenzwerts liegt, werden wiederholt Abtauphasen durchgeführt, wie weiter unten beschrieben.

Der Temperatursensor 15 erfasst die Temperatur der durch die Abluftleitung 6 aus dem Gebäudeinneren abgeführten Luft (="Ablufttemperatur"). Der Temperatursensor 16 erfasst die Temperatur der durch die Fortluftleitung 7 strömenden Luft ("Fortlufttemperatur").

Die von der Steuerung 13 durchgeführte Ansteuerung eines oder mehrere Elemente kann in einem geschlossenen Kreis (=Regelkreis) erfolgen, d.h. der Begriff "Steuerung" soll auch den Begriff "Regelung" umfassen.

Solche Lüftungsanlagen werden auch als Anlagen zur kontrollierten Be- und Entlüftung oder als Komfortlüftungen bezeichnet.

In einem Normalbetrieb der Lüftungsanlage ist die Bypassleitung 10 durch die Absperrvorrichtung, im Ausführungsbeispiel durch das Absperrorgan 11 geschlossen und die durch die Frischluftleitung 4 strömende Luft wird dem Zuluftkanal 2 des Wärmetauschers zugeführt. Wenn die Temperatur der durch den Zuluftkanal 2 des Wärmetauschers 1 geführten Luft geringer ist als die durch den Abluftkanal 3 des Wärmetauschers 1 aus dem Gebäudeinneren abgeführte Luft, so erfolgt ein Wärmeübertrag von der aus dem Gebäudeinneren abgeführten Luft an die durch den Zuluftkanal 2 zuströmende Luft.

In einem Sommerbetrieb der Lüftungsanlage, wenn, beispielsweise in der Nacht, kein solcher Wärmeübertrag auf die durch die Frischluftleitung 4 zugeführte Luft erwünscht ist, wird mittels der Absperrvorrichtung der Zuluftkanal 2 abgesperrt und die durch die Frischluftleitung 4 strömende Luft wird in die Bypassleitung 10, unter Umgehung des Wärmetauschers 1, geleitet.

In der Zuluftleitung 5 befindet sich stromabwärts der Einmündung der Bypassleitung 10 in die Zuluftleitung 5 (also bezogen auf die Strömungsrichtung danach) ein Hilfs-Wärmetauscher 17. Dieser dient zum Erwärmen von über die Bypassleitung 10 am Wärmetauscher 2 vorbeigeführter Luft während eines Abtauprozesses, wie weiter unten erläutert.

Beispielsweise ist der Hilfs-Wärmetauscher 17in der in den Fig. 2 und 3 schematisch dargestellten Art und Weise ausgeführt. Der Hilfs-Wärmetauscher 17 besitzt eine Mehrzahl von Röhrchen 18, diese verlaufen quer durch den Bereich, durch den die Luft strömt. Der Luftstrom ist in Fig. 2 schematisch durch Pfeile angedeutet. Auf den Röhrchen 18 sind parallel zueinander und durch Spalte 20 voneinander beabstandet Lamellen 21 angeordnet, von denen in Fig. 2 lediglich zwei durch strichlierte Linien angedeutet sind. Die Luft strömt durch die Spalte 20 zwischen den Lamellen 21 und zwischen den Röhrchen 18 durch.

Die Röhrchen 18 sind endseitig alle oder in zwei oder mehr Gruppen miteinander verbunden, um die Befüllung über mindestens einen in den Fig. 2 und 3 der Einfachheit halber nicht dargestellte Einfüllstutzen zu erleichtern.

Die Röhrchen 18 sind mit einem Phasenwechselmaterial 19 befüllt, vgl. Fig. 4. Das Einfüllen des Phasenwechselmaterials 19 erfolgt im flüssigen Zustand des Phasenwechselmaterials 19.

Die Schmelztemperatur des Phasenwechselmaterials liegt im Bereich von 16° C bis 19° C, vorzugsweise im Bereich von 17° C bis 18° C, beispielsweise bei etwa 17,5° C.

Die inneren Kanäle der Röhrchen 18 bilden zusammen einen Innenraum dieses Hilfs-Wärmetauschers, in welchem das Phasenwechselmaterial 19 aufgenommen ist. Auch andere Ausbildungen von Innenräumen eines Hilfs-Wärmetauschers zur Aufnahme eines Phasenwechselmaterials sind denkbar und möglich.

Der Hilfs-Wärmetauscher mit dem in seinem Innenraum aufgenommenen Phasenwechselmaterial 19 bildet einen Latentwärmespeicher.

Wenn die den Hilfs-Wärmetauscher durchströmende Luft eine Temperatur unterhalb der Schmelztemperatur des Phasenwechselmaterials 19 aufweist und sich das Phasenwechselmaterial 19 zumindest teilweise in seinem flüssigen Zustand befindet, kommt es zu einer Verfestigung eines zunehmenden Teils des Phasenwechselmaterials 19, wobei eine Wärmemenge entsprechend der Schmelzwärme an die Luft abgegeben wird und die Luft hierbei erwärmt wird, und zwar, bei einer entsprechenden Effizienz des Hilfs-Wärmetauschers bis auf eine Temperatur nahe der Schmelztemperatur des Phasenwechselmaterials, vorzugsweise auf eine weniger als 1° C unter der Schmelztemperatur des Phasenwechselmaterials liegende Temperatur.

Wenn die Temperatur der durch die Frischluftleitung 4 zugeführten Luft so weit unter dem Gefrierpunkt liegt, dass es im Normalbetrieb zu einer Vereisung des Ausgangsbereichs des Abluftkanals 3 kommen kann, so wird der Normalbetrieb sich wiederholend durch Abtauphasen unterbrochen, wobei während einer jeweiligen Abtauphase ein Abtauprozess durchgeführt wird. Im Normalbetrieb wird also jeweils die Bildung von Eis im Ausgangsbereich des Abluftkanals 3 zugelassen, welches während der Abtauphase wieder geschmolzen wird. Beispielsweise kann als Temperaturgrenzwert der Temperatur der Frischluft, unterhalb von welchem wiederholt Abtauprozesse durchgeführt werden, ein Wert von -4° C gewählt werden. Jedenfalls liegt dieser Temperaturgrenzwert nicht oberhalb von 0° C. Im Allgemeinen wird der Temperaturgrenzwert im Bereich von -6° C bis -1° C, vorzugsweise im Bereich von -5° C bis -3° C liegen.

Während einer jeweiligen Abtauphase wird, analog zum Sommerbetrieb, der Zuluftkanal 2 mittels der Absperrvorrichtung gegenüber der durch die Frischluftleltung 4 geförderten Luft abgesperrt und diese Luft durch die Bypassleitung 10 unter Umgehung des Wärmetauschers 1 geführt. Die durch die Abluftleitung 6 und durch den Abluftkanal 3 geförderte Luft wärmt dadurch den Wärmetauscher 1 bis zum Endbereich des Abluftkanals 3 so weit auf, dass im Endbereich des Abluftkanals 3 gebildetes Eis geschmolzen wird.

Die am Wärmetauscher 1 vorbeigeführte Luft, deren Temperatur annähernd die Temperatur der im Freien sich befindenden Luft aufweist, strömt von der Bypassleitung 10 in die Zuluftleitung 5 und in dieser durch den Hilfs-Wärmetauscher 17, in welchem durch die Aufnahme von Erstarrungswärme des Phasenwechselmaterials 19 eine Erwärmung der Luft bis annähernd auf die Schmelztemperatur des Phasenwechselmaterials 19 erfolgt. Vorteilhafterweise erfolgt eine Erwärmung auf eine Temperatur, welche weniger als 1° C unterhalb der Schmelztemperatur des Phasenwechselmaterials liegt. Beispielsweise kann bei einer Schmelztemperatur von 17,5° C die Temperatur der Luft nach dem Durchtritt durch den Hilfs-Wärmetauscher 17° C betragen.

Am Ende einer jeweiligen Abtauphase wird der Normalbetrieb wieder aufgenommen, d.h. mittels der Absperrvorrichtung wird die Bypassleitung 10 geschlossen und der Zuluftkanal 2 freigegeben. Die durch den Zuluftkanal 2 strömende Luft wird also durch die durch den Abluftkanal 3 strömende Luft im Wärmetauscher 1 erwärmt, und zwar auf eine Temperatur, die oberhalb der Schmelztemperatur des Phasenwechselmaterials 19 liegt, beispielsweise auf 19° C. Die durch den Hilfs-Wärmetauscher 17 strömende Luft erwärmt somit das Phasenwechselmaterial 19 so stark, dass dieses sich nach und nach wieder verflüssigt, wobei es Schmelzwärme aus der durch die Zuluftleitung 5 strömenden Luft aufnimmt. Die Temperatur der Luft nach dem Durchströmen des Hilfs-Wärmetauschers 17 liegt dann geringfügig (vorzugsweise weniger als 1° C) oberhalb der Schmelztemperatur des Phasenwechselmaterials, so lange noch nicht alles Phasenwechselmaterial 19 verflüssigt ist. Beispielsweise beträgt diese Temperatur der Luft dann bei einer Schmelztemperatur des Phasenwechselmaterials von 17,5° C etwa 18° C.

Wenn alles Phasenwechselmaterial 19 verflüssigt ist, ist der Latentwärmespeicher wieder vollständig "geladen". Das Laden des Latentwärmespeichers erfolgt also im Normalbetrieb selbsttätig ohne dass weitere Maßnahmen erforderlich sind, wenn die Temperatur im Gebäudeinneren einen ausreichend hohen, der üblichen Raumtemperatur entsprechenden Wert aufweist. Sollte die Raumtemperatur im Gebäudeinneren zeitweise unter ihren üblichen Wert absinken, sodass es zu keiner Verflüssigung des Phasenwechselmaterials 19 mehr kommt, so entsteht dadurch kein Schaden, wenn dies zeitlich begrenzt ist. Lediglich kommt es zu keiner Erwärmung der Zuluft während einer jeweiligen Abtauphase. Wenn wieder eine normale Raumtemperatur erreicht wird, wird das Phasenwechselmaterial 19 im Normalbetrieb wieder selbsttätig geladen. Es kann auch vorgesehen sein eine Abschaltung der Lüftungsanlage durchzuführen, wenn die Raumtemperatur einen vorgegebenen Wert unterschreitet.

Bei einer Raumtemperatur im Gebäudeinneren in einem vorgesehenen Bereich, dessen Untergrenze vorzugsweise bei mindestens 20° C liegt, wird somit immer eine oberhalb der Zuluft-Mindesttemperatur liegende Temperatur der dem Gebäudeinneren zugeführten Luft erreicht.

Als Zuluft-Mindesttemperatur kann beispielsweise 16,5° C gewählt werden, wie dies üblich ist. Vorzugsweise liegt die Zuluft-Mindesttemperatur im Bereich von 15,5° C bis 17,5°C.

Es wird also ein Phasenwechselmaterial 19 gewählt, dessen Schmelztemperatur höher als die Zuluft-Mindesttemperatur ist. Das Phasenwechselmaterial wird hierbei so gewählt, dass dessen Schmelztemperatur ausreichend niedrig ist, sodass zwischen zwei jeweiligen Abtauphasen ein in der vorausgehenden Abtauphase erstarrter Anteil von Phasenwechselmaterial 19 wieder geschmolzen wird. Phasenwechselmaterialien 19 mit geeigneten Schmelztemperaturen, vorzugsweise im Bereich von 16,5 ° C bis 18,5 ° C, besonders bevorzugt im Bereich von 17° C bis 18° C, sind bekannt. Insbesondere weisen solche Phasenwechselmaterialien Paraffine als Basismaterialien auf, gegebenenfalls mit Zusätzen.

Günstigerweise kann die Dauer einer jeweiligen Abtauphase im Bereich von 1 min bis 10 min, vorzugsweise im Bereich von 2 min bis 5 min liegen. Die Dauer wird so lange gewählt, dass die seit der letzten Abtauphase gebildete Eismenge jedenfalls geschmolzen wird. Die Menge des gebildeten Eises hängt von der Luftmenge (also dem Volumenstrom mal der Zeit zwischen den beiden Abtauphasen), der Außentemperatur und der Abluftfeuchte ab. Die Dauer einer jeweiligen Abtauphase kann an die abzutauende Eismenge in Abhängigkeit von den genannten Faktoren angepasst werden. Beispielsweise können die Abtauphasen zu sich periodisch wiederholenden Beginnzeiten durchgeführt werden. Die Dauer einer jeweiligen Abtauphase kann dann an die erwartete Menge des gebildeten Eises angepasst werden. Die Abtauphasen könnten auch gleich lang sein und zwar jeweils so lang, dass jedenfalls die größte zu erwartende Eismenge abgetaut wird. Die Dauer des Normalbetriebes zwischen zwei Abtauphasen könnte auch unterschiedlich gewählt werden, in Abhängigkeit von der Geschwindigkeit, mit welcher Eis gebildet wird, wobei diese Eisbildungsrate von den zuvor genannten Faktoren abhängt.

Zur Bestimmung der Luftfeuchtigkeit der Abluft kann anstelle eines (relativ teuren) Luftfeuchtigkeitssensors auch die Bestimmung der Differenz zwischen der Temperatur der Raumluft nach dem Durchtritt durch den Wärmetauscher 4, also die vom Temperatursensor 16 ermittelte Temperatur, und der Außenlufttemperatur, also die vom Temperatursensor 14 ermittelte Temperatur herangezogen werden. Je größer diese Temperaturdifferenz ist, desto höher ist die Luftfeuchtigkeit der Abluft, wobei ein zumindest annähernd linearer Zusammenhang vorliegt.

Die Dauer einer jeweiligen Abtauphase und/oder die Dauer des Normalbetriebs zwischen zwei Abtauphasen kann auch in Abhängigkeit von der Temperatur der durch die Abluftleitung 6 aus dem Gebäudeinneren abgeführten Luft, also der vom Temperatursensor 15 erfassten Temperatur eingestellt werden. Diese Temperatur hat sowohl Einfluss auf die gebildete Eismenge als auch auf die zum Abtauen des Eises zur Verfügung stehende Wärmemenge.

Die Dauer des Normalbetriebs zwischen zwei Abtauphasen kann beispielsweise im Bereich von 30 min bis 4 Std. liegen.

Es kann zweckmäßig sein, während einer jeweiligen Abtauphase die Volumenströme der durch die Ablaufleitung 6 (und weiter durch den Abluftkanal 3 und die Fortluftleitung 7) geförderten Luft sowie der durch die Frischluftleitung 4 (und weiter durch die Bypassleitung 10 und die Zuluftleitung 5) geförderten Luft gegenüber dem Normalbetrieb zu verringern, beispielsweise auf einen Wert der im Bereich von 60-80% des Werts liegt, der vor und nach der jeweiligen Abtauphase vorliegt. Es kann dadurch eine geringere Größe des Hilfs-Wärmetauschers und/oder eine geringere Menge von Phasenwechselmaterial 19 ermöglicht werden.

Die Lüftungsanlage ist also derart ausgelegt, dass Phasenwechselmaterial 19, welches während einer jeweiligen Abtauphase bei der Erwärmung der durch die Zuluftleitung 5 strömenden Luft erstarrt ist, im Anschluss an die Abtauphase durch einen Wärmeübertrag aus der durch den Zuluftkanal 2 des Wärmetauschers in die Zuluftleitung 5 geführten Luft wieder geschmolzen wird. Die Lüftungsanlage ist somit dazu ausgebildet, das Phasenwechselmaterial allein mittels der nach Abschluss einer jeweiligen Abtauphase durch den Hilfs-Wärmetauscher 17 geführten Zuluft zu regenerieren. Eine solche Auslegung der Lüftungsanlage umfasst insbesondere die Wahl eines Phasenwechselmaterials, dessen Schmelzpunkt in einem geeigneten Temperaturbereich, wie oben ausgeführt, liegt. Günstigerweise kann bei einer solchen Auslegung gleichzeitig erreicht werden, dass die dem Gebäudeinneren zugeführte Luft auch während der Regeneration des Phasenwechselmaterials oberhalb einer Zuluft-Mindesttemperatur liegt, die vorzugsweise im Bereich von 15,5° C bis 17,5° C liegt.

Bei dieser Auslegung wird davon ausgegangen, dass die Raumtemperatur im Gebäudeinneren oberhalb einer Raum-Mindesttemperatur liegt, die beispielsweise 20° C beträgt.

Im Weiteren muss der Wirkungsgrad des Wärmetauschers 1 ausreichend hoch sein, damit die Regeneration des Phasenwechselmaterials nach einer jeweiligen Abtauphase ermöglicht wird, insbesondere bei sehr niedrigen Temperaturen. Bei sehr niedrigen Temperaturen, beispielsweise von weniger als -5° C, oder auch erst von weniger als -8° C, kann es vorteilhaft sein, den Volumenstrom durch den Abluftkanal und durch den Zuluftkanal des Wärmetauschers 1, zumindest bis alles Phasenwechselmaterial 19 wieder verflüssigt ist, zu verringern. Dadurch kann der Wirkungsgrad des Wärmetauschers bei diesen niedrigen Temperaturen erhöht werden.

Der Wärmetauscher 1 ist somit so ausgebildet und/oder wird so betrieben, dass sein Wirkungsgrad zumindest bei Temperaturen von weniger als -5° C (oder weniger als - 8° C) bei über 85% liegt. Beispielsweise kann der Wirkungsgrad des Wärmetauschers 1 durch eine zunehmende Reduktion des Luftstroms bei fortlaufend kälteren Temperaturen auf bis zu 90% erhöht werden.

Es wird somit ein Betrieb des Wärmetauschers 1 ohne einen Verschluss des Abluftkanals durch Vereisung bis zu einer Außentemperatur von -20° C, vorzugsweise bis zu -25° C ermöglicht.

### Legende

### zu den Hinweisziffern:

- 1: Wärmetauscher
- 2: Zuluftkanal
- 3: Abluftkanal
- 4: Frischluftleitung
- 5: Zuluftleitung
- 6: Abluftleitung
- 7: Fortluftleitung
- 8: Zuluftventilator
- 9: Abluftventilator
- 10: Bypassleitung
- 11: erstes Absperrogan
- 12: zweites Absperrorgan
- 13: Steuerung
- 14: Temperatursensor
- 15: Temperatursensor
- 16: Temperatursensor
- 17: Hilfs-Wärmetauscher
- 18: Röhrchen
- 19: Phasenwechselmaterial
- 20: Spalt
- 21: Lamelle

## Patentansprüche

1. Verfahren zum Betreiben einer Lüftungsanlage, welche einen Wärmetauscher (1) mit einem Zuluftkanal (2), durch den aus dem Freien durch eine Frischluftleitung (4) zugeführte Luft führbar ist, und einem Abluftkanal (3) aufweist, durch den aus dem Gebäudeinneren abgeführte Luft geführt wird, wobei durch die Frischluftleitung (4) strömende Luft mittels einer Absperrvorrichtung (11, 12) wahlweise einem eingangsseitigen Ende des Zuluftkanals (2) des Wärmetauschers (1) oder einer den Wärmetauscher (1) umgehenden Bypassleitung (10) zuführbar ist, wobei unterhalb eines Temperaturgrenzwertes zum Verhindern des Verschlusses des Abluftkanals (3) des Wärmetauschers (1) in Folge Vereisung in wiederholten Abtauphasen jeweils ein Abtauprozess durchgeführt wird, in welchem die aus dem Freien zugeführte Luft zumindest teilweise, vorzugsweise vollständig, unter Umgehung des Wärmetauschers (1) über die Bypassleitung (10) einer mit einem ausgangsseitigen Ende des Zuluftkanals (2) des Wärmetauschers (1) verbundenen Zuluftleitung (5) zugeführt wird und die durch die Zuluftleitung (5) strömende Luft in einem Hilfs-Wärmetauscher (17) erwärmt wird, und im Anschluss an einen jeweiligen Abtauprozess die aus dem Freien zugeführte Luft wieder durch den Zuluftkanal (2) des Wärmetauschers (1) der Zuluftleitung (5) zugeführt wird, wobei die Erwärmung der durch die Zuluftleitung (5) strömenden Luft während eines jeweiligen Abtauprozesses im Hilfs-Wärmetauscher (17) mittels eines Phasenwechselmaterials (19) durchgeführt wird, **dadurch gekennzeichnet, dass** Phasenwechselmaterial (19), welches während einer jeweiligen Abtauphase bei der Erwärmung der durch die Zuluftleitung (5) strömenden Luft erstarrt ist, im Anschluss an die Abtauphase durch einen Wärmeübertrag aus der durch den Zuluftkanal (2) des Wärmetauschers in die Zuluftleitung (5) geführten Luft wieder geschmolzen wird.

2. Verfahren nach Anspruch 1, **dadurch gekennzeichnet, dass** die Dauer eines jeweiligen Abtauprozesses 1 min bis 10 min, vorzugsweise 2 min bis 5 min beträgt.

3. Verfahren nach Anspruch 1 oder 2, **dadurch gekennzeichnet, dass** die Schmelztemperatur des Phasenwechselmaterials (19) im Bereich von 16° C bis 19° C, vorzugsweise im Bereich von 17° C bis 18° C liegt.

4. Verfahren nach einem der Ansprüche 1 bis 3, **dadurch gekennzeichnet, dass** das Phasenwechselmaterial (19) Paraffin enthält oder aus Paraffin besteht.

5. Verfahren nach einem der Ansprüche 1 bis 4, **dadurch gekennzeichnet, dass** eine Steuerung (13) der Lüftungsanlage eine Temperatur erfasst, welche der Temperatur der Luft im Freien entspricht oder mit dieser korreliert, wobei bei einem unterhalb eines Temperaturgrenzwertes liegenden Wert dieser Temperatur während wiederholter Abtauphasen von der Steuerung durch Ansteuerung der Absperrvorrichtung (11, 12) die durch die Zuluftleitung (5) geführte Luft zumindest teilweise, vorzugsweise vollständig, unter Umgehung des Wärmetauschers (1) der Bypassleitung (10) zugeführt wird und nach Beendigung einer jeweiligen Abtauphase von der Steuerung durch Ansteuerung der Absperrvorrichtung (11, 12) die Bypassleitung (10) abgesperrt wird und die durch die Zuluftleitung (5) geführte Luft dem Zuluftkanal (2) des Wärmetauschers (1) zugeführt wird.

6. Lüftungsanlage umfassend
- eine Frischluftleitung (4) für aus dem Freien zugeführte Luft,
- einen Wärmetauscher (1), welcher einen Zuluftkanal (2), der einerseits mit der Frischluftleitung (4) und andererseits mit einer Zuluftleitung (5) zur Weiterführung der aus dem Zuluftkanal (2) austretenden Luft ins Gebäudeinnere verbunden ist, und einen Abluftkanal (3) aufweist, der einerseits mit einer Abluftleitung (6) für aus dem Gebäudeinneren abgeführte Luft und andererseits mit einer ins Freie führenden Fortluftleitung (7) verbunden ist,
- Zuluft- und Abluftventilatoren (8, 9) zum Zuführen der Luft aus dem Freien und Abführen der Luft aus dem Gebäudeinneren,
- eine zwischen der Frischluftleitung (4) und Zuluftleitung (5) verlaufende Bypassleitung (10), wobei die aus dem Freien zugeführte Luft mittels einer Absperrvorrichtung (11, 12) wahlweise durch den Zuluftkanal (2) des Wärmetauschers (1) oder unter Umgehung des Wärmetauschers (1) durch die Bypassleitung (10) führbar ist,
- eine Steuerung (13) zum Ansteuern der Absperrvorrichtung (11, 12) und
- einen Hilfs-Wärmetauscher (17), durch welchen stromabwärts der Einmündung der Bypassleitung (10) in die Zuluftleitung (5) die durch die Zuluftleitung (5) strömende Luft geführt ist und in welchem zum Erwärmen von durch die Zuluftleitung (5) strömender Luft während wiederholter Abtauphasen ein Phasenwechselmaterial (19) angeordnet ist,
**dadurch gekennzeichnet, dass** die Lüftungsanlage dazu ausgelegt ist, Phasenwechselmaterial (19), welches während einer jeweiligen Abtauphase bei der Erwärmung der durch die Zuluftleitung (5) strömenden Luft erstarrt ist, im Anschluss an die Abtauphase durch einen Wärmeübertrag aus der durch den Zuluftkanal (2) des Wärmetauschers in die Zuluftleitung (5) geführten Luft wieder zu schmelzen.

7. Lüftungsanlage nach Anspruch 6, **dadurch gekennzeichnet, dass** die Schmelztemperatur des Phasenwechselmaterials (19) im Bereich von 16° C bis 19° C, vorzugsweise im Bereich von 17° C bis 18° C liegt.

8. Lüftungsanlage nach Anspruch 6 oder 7, **dadurch gekennzeichnet, dass** das Phasenwechselmaterial (19) Paraffin enthält oder aus Paraffin besteht.

9. Lüftungsanlage nach einem der Ansprüche 6 bis 8, **dadurch gekennzeichnet, dass** die Steuerung (13) eine Temperatur erfasst, welche der Temperatur der Luft im Freien entspricht oder mit dieser korreliert, und bei einem unterhalb eines Temperaturgrenzwertes liegenden Wert dieser Temperatur während wiederholter Abtauphasen durch Ansteuerung der Absperrvorrichtung (11, 12) die durch die Zuluftleitung (5) geführte Luft zumindest teilweise, vorzugsweise vollständig, unter Umgehung des Wärmetauschers (1) der Bypassleitung (10) zuführt und nach Beendigung einer jeweiligen Abtauphase durch Ansteuerung der Absperrvorrichtung (11, 12) die Bypassleitung (10) absperrt und die durch die Zuluftleitung (5) geführte Luft dem Zuluftkanal (2) des Wärmetauschers (1) zuführt.
